**Europäisches Patentamt**

**European Patent Office**

**Office européen des brevets**

(19)

(11) Veröffentlichungsnummer: **0 090 455**
**A1**

(12) # EUROPÄISCHE PATENTANMELDUNG

(21) Anmeldenummer: **83200391.7**

(22) Anmeldetag: **22.03.83**

(51) Int. Cl.³: **F 28 D 17/02, F 27 D 1/04,
F 27 D 17/00, C 03 B 5/235**

(30) Priorität: **26.03.82 AT 1196/82**

(43) Veröffentlichungstag der Anmeldung: **05.10.83**
**Patentblatt 83/40**

(84) Benannte Vertragsstaaten: **BE DE FR GB IT**

(71) Anmelder: **Veitscher
Magnesitwerke-Actien-Gesellschaft,
Schubertring 10-12, A-1010 Wien (AT)**

(72) Erfinder: **Pristovnik, Anton, Nr. 154, A-8784 Trieben (AT)**
Erfinder: **Harzl, Dieter, Dipl. Ing., Nr. 51, A-8784 Trieben (AT)**
Erfinder: **Kittl, Othmar, Nr. 51, A-8784 Trieben (AT)**

(74) Vertreter: **Kliment, Peter, Dipl.-Ing.Mag.-iur. et al,
Singerstrasse 8, A-1010 Wien (AT)**

(54) **Feuerfester Gitterstein für Regenerativkammern von Glasöfen.**

(57) Ein feuerfester Gitterstein für Regenerativkammern von Glasöfen, welcher Stein (1) eine im wesentlichen prismatische Gestalt aufweist, ist zwecks optimaler Ausnutzung seines gesamten Volumens zur Wärmespeicherung und -abgabe bei guter Standfestigkeit und rationeller Lagerungsfähigkeit bereichsweise mit Zonen verminderter Materialstärke ausgestattet, indem er an mindestens einer seiner größeren Längsseitenflächen – das sind die Flächen, die im eingebauten Zustand des Gittersteines (1) die Kanäle für den Gasdurchgang begrenzen – Vorsprünge (3, 4, 5, 6) und/oder Vertiefungen (2, 2', 21, 22) aufweist. Der Stein (1) eignet sich insbesondere für den Besatz liegender Gitterungen mit horizontalem Gasdurchgang.

EP 0 090 455 A1

## Feuerfester Gitterstein für Regenerativkammern von Glasöfen

Die Erfindung bezieht sich auf einen feuerfesten Gitterstein für Regenerativkammern von Glasöfen, welcher Stein eine im wesentlichen prismatische Gestalt aufweist.

Derartige parallelepipedförmige Gittersteine werden seit langem verwendet. Diese Steine weisen eine Dicke bzw. eine Breite ihrer Aufstands- und Deckflächen von 64 oder 76 mm oder mehr auf.

Es hat sich gezeigt, daß während des üblichen Betriebes eines Glasofens eine volle Aufheizung solcher Steine während der Beaufschlagung mit heißen Abgasen in deren inneren Bereichen meist nicht erfolgt. Dadurch ergibt sich eine schlechte Ausnutzung des Volumens der Regenerativkammer.

Es wurden auch schon schmelzgegossene Steine aus hochschmelzenden Materialien, wie Siliziumoxid, Aluminiumoxid, Zirkonoxid, Magnesiumoxid, Chromoxid bzw. Mischungen davon, vorgeschlagen, die im Querschnitt eine kreuzförmige Gestalt aufweisen und deren drei oder vier Arme eine Dicke von 50 mm oder weniger, vorzugsweise etwa 40 mm, besitzen.

Derartige Steine erlauben zwar eine gute Ausnutzung des Kammervolumens und eine gute Ausnutzung der Wärme der Abgase, doch sind diese Steine schwierig herzustellen und erfordern wegen ihrer Gestalt bei der Lagerung relativ viel Platz.

Aufgabe der Erfindung ist es, einen Stein der eingangs genannten Art so auszubilden, daß er sich einfach herstellen und auf kleinem Raum lagern läßt und daß trotz einer guten Standfestigkeit die Ausnutzung praktisch seines gesamten Volumens zur Wärmespeicherung und -abgabe sichergestellt ist.

Nach der Erfindung wird dies dadurch erreicht, daß der Gitterstein bereichsweise mit Zonen verminderter Materialstärke ausgestattet ist, indem er an mindestens einer seiner größeren Längsseitenflächen Vorsprünge und/oder Vertiefungen aufweist. Die größeren Längsseitenflächen sind die Flächen, welche im eingebauten Zustand des Gittersteines die Kanäle für den Gasdurchgang begrenzen.

In den erwähnten Zonen kann die Materialstärke beispielsweise auf 40 mm vermindert sein. Auf diese Weise wird das bei den bisher üblichen parallelepipedförmigen Steinen, die üblicherweise in Dicken von 64, 76, 110 und 160 mm hergestellt wurden, vorhandene "tote Volumen", das zur Wärmeaufnahme und zur Wärmeabgabe des Steines während der üblichen Beaufschlagungsdauer mit Abgasen bzw. Frischluft kaum etwas beiträgt, weitgehend vermieden. Damit ergibt sich eine beträchtliche Materialeinsparung bei der Herstellung der erfindungsgemäßen Steine, wobei die Standsicherheit der Steine voll erhalten bleibt.

Nach einer vorteilhaften Ausführungsform weist der Stein über seine gesamte Längserstreckung verlaufende, als Randstreifen ausgebildete Vorsprünge, die mit den Grund- bzw. Deckflächen des Steines abschließen, und in seiner Längserstreckung einen durchgehenden I-förmigen Querschnitt auf. Derartige Steine lassen sich besonders einfach herstellen. Bei einer aus solchen Steinen aufgebauten Gitterung ergibt sich zwar durch das abwechselnde Komprimieren und Expandieren der Gassäule in den Zügen ein gegenüber einer mit herkömmlichen Steinen mit ebenen vertikalen Flächen aufgebauten Gitterung geringfügig erhöhter Druckverlust, doch wird anderseits aufgrund der dadurch bedingten Verwirbelung der Strömung ein besserer Wärmeübergang von der Gassäule zum Stein bzw. umgekehrt erzielt.

Nach einer weiteren Ausführungsform eines erfindungsgemäßen Steines sind die Randstreifen über mindestens einen quer zur größeren Längsseitenfläche verlaufenden Mittelsteg verbunden, der mit den Randstreifen eben abschließt. Bei diesem Stein ergeben sich im wesentlichen die gleichen Verhältnisse wie bei dem zuvor beschriebenen Stein, doch ergibt sich durch den Mittelsteg eine erhöhte Standfestigkeit.

Bei einer weiteren Ausführungsform sind in beiden größeren Längsseitenflächen des Steines zentral angeordnete und allseitig umrandete Vertiefungen eingearbeitet. Dieser Stein zeichnet sich ebenfalls durch eine hohe Standfestigkeit und eine gute Stapelbarkeit bei der Lagerung aus.

Bei einer weiteren Ausführungsform weist der Stein einen sich von seiner Grundfläche zu seiner Deckfläche erstreckenden, als Mittelrippe ausgebildeten Vorsprung auf, der vorzugsweise einen trapezförmigen Querschnitt besitzt. Dieser Stein kann in seiner Gesamtheit relativ dünn ausgeführt werden, wobei aber durch die Mittelrippe eine genügende Standfestigkeit auf einfache Weise sichergestellt werden kann.

Ein vorteilhafter Kompromiß im Hinblick auf eine gute Ausnutzung des Speichervermögens des Steinmaterials und auf die Standsicherheit sowie die Vermeidung von extremen Wandstärkenunterschieden ergibt sich, wenn die Grundfläche des Steines zumindest abschnittweise eine Breite von mindestens 60 mm aufweist und seine minimale Wandstärke höchstens 50 mm beträgt.

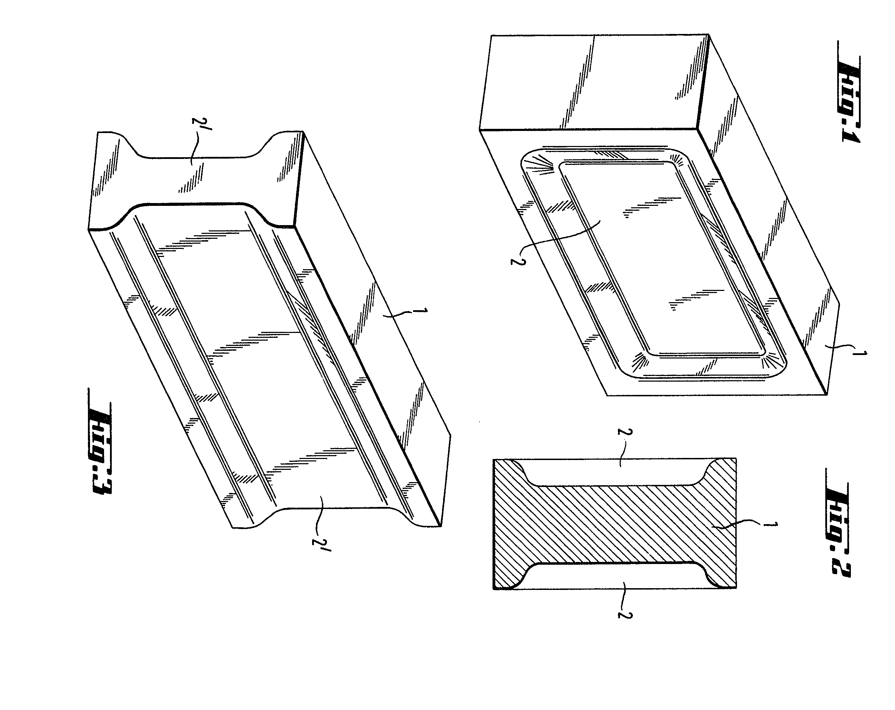

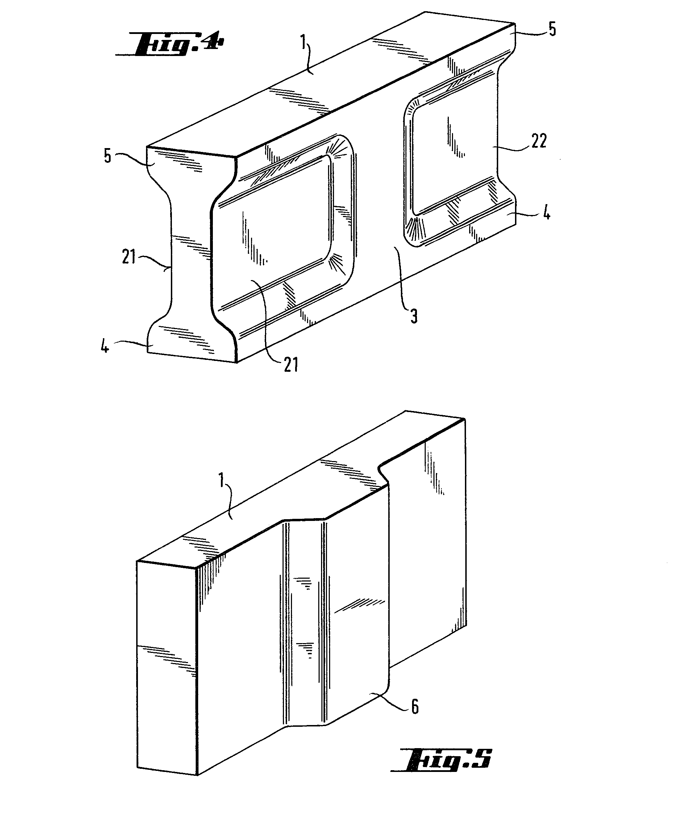

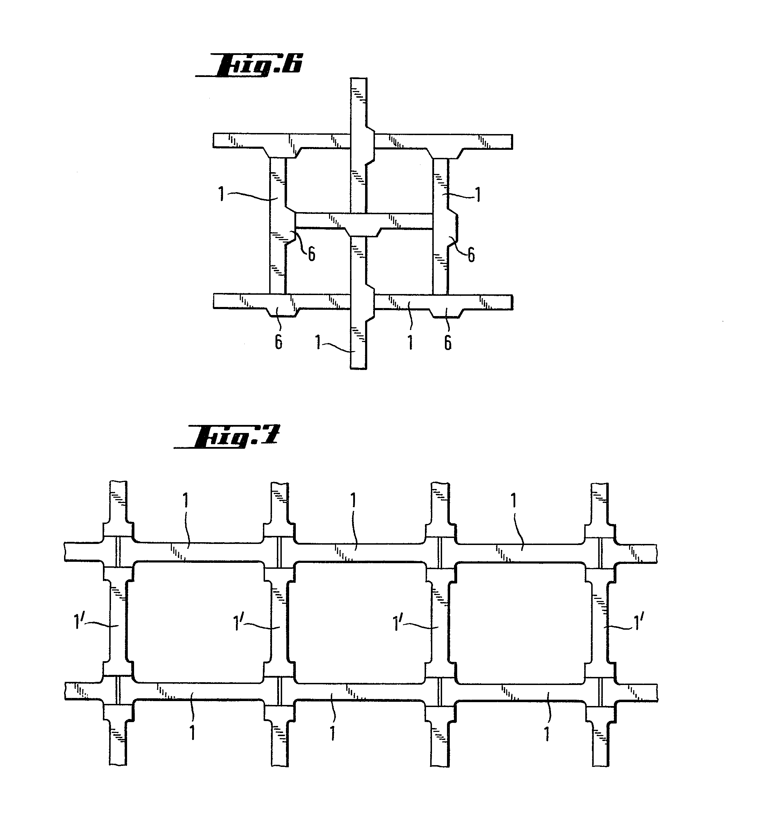

Die Erfindung wird nun an Hand der Zeichnungen näher erläutert. Dabei zeigen Fig. 1 und 2 ein erstes Ausführungsbeispiel in Schrägansicht und Schnitt, Fig. 3, 4 und 5 weitere Ausführungsbeispiele in Schrägansichten, Fig. 6 eine Teilansicht einer mit Steinen gemäß Fig. 5 aufgebaute Gitterung und Fig. 7 eine Teilansicht einer aus Steinen gemäß Fig. 3 aufgebauten liegenden Gitterung.

Bei der Ausführungsform gemäß Fig. 1 und 2 ist ein Gitterungsstein 1 üblicher Größe von z.B. 114 x 64 x 345 mm an seinen beiden größeren Längsseitenflächen mit Vertiefungen 2 versehen, die von den Randzonen des Steines 1 allseitig umschlossen sind. Die Tiefe jeder der beiden Vertiefungen ist gleich und so gewählt, daß sich im Mittelbereich des Steines 1 eine Dicke von etwa 40 mm ergibt.

Durch diese Ausbildung wird die gleiche Standsicherheit wie bei den herkömmlichen glatten Gitterungssteinen erreicht, jedoch die bei den letzteren auftretenden toten oder inaktiven Zonen im Inneren des Steines, die bei den beim Betrieb eines Glasofens üblichen Beaufschlagungszeiten mit Abgasen bzw. Frischluft praktisch nichts zur Wärmeaufnahme bzw. -abgabe beitragen, vermieden.

Die Ausführungsform gemäß Fig. 3 unterscheidet sich von jener gemäß Fig. 1 und 2 dadurch, daß die Vertiefungen 2' über die gesamte Länge des Steines 1 durchgehen und dieser daher einen I-förmigen Querschnitt aufweist.

Bei der Ausführungsform gemäß Fig. 4 ist ein Mittelsteg 3 vorgesehen, der die sich entlang der Längskanten der Grund- und der Deckfläche des Steines 1 erstreckenden Randstreifen 4, 5 miteinander verbindet und mit diesen eine Ebene bildet. Der Stein gemäß der Fig.4 weist daher vier Vertiefungen 21, 22 auf, von denen jede an drei Seiten von den Randstreifen 4, 5 bzw. dem Mittelsteg 3 begrenzt, gegen die Stirnflächen des Steines dagegen offen ist.

Der Stein 1 gemäß dem Ausführungsbeispiel nach Fig. 5 weist zum Unterschied von den zuvor erläuterten Ausführungsbeispielen seine größte Dicke lediglich im Bereich einer von der Grundfläche bis zur Deckfläche des Steines 1 verlaufenden Mittelrippe 6 auf, die aus einer größeren Längsseitenflächen des Steines vorspringt. Dabei trägt diese Mittelrippe 6, die im gezeichneten Beispiel einen trapezförmigen Querschnitt besitzt, zur Erhöhung der Standfestigkeit des Steines bei. Der Stein weist im Bereich der Mittelrippe 6 eine Dicke von z.B. 65 mm auf, wogegen er in den übrigen, seitlich der Mittelrippe 6 liegenden Bereichen nur eine geringe Dicke, z.B. von etwa 40 mm, besitzt.

Aus Fig. 6 ist ersichtlich, daß beim Aufbau einer Gitterung mit Steinen 1 gemäß Fig. 5 die Steine jeweils im Bereich der Mittelrippe 6 aneinandergestellt werden.

Die erfindungsgemäßen Steine können aus den für Gitterungen gebräuchlichen feuerfesten Materialien, wie Sintermagnesia, Magnesiachromerz bzw. Chromerzmagnesia, Forsterit, Chromit, Schamotte, bestehen, die insbesondere als Kornmaterial eingesetzt werden.

Die Gitterungssteine nach der Erfindung eignen sich zum Aufbau von stehenden Gitterungen mit vertikalem Gasdurchgang. Sie können aber auch zum Aufbau sogenannter liegender Gitterungen verwendet werden, bei denen der Gasdurchgang in horizontaler Richtung erfolgt. Für den letztgenannten Fall eignen sich insbesondere die Steine nach der Ausführungsform gemäß Fig. 3. In Fig. 7 ist eine solche liegende Gitterung in einer Teilansicht dargestellt, wobei zur Erzielung eines annähernd quadratischen Kanalquerschnitts die Steine gemäß Fig. 3 in zwei Steinformaten 1 und 1' angewendet sind.

PATENTANSPRÜCHE :

1.    Feuerfester Gitterstein für Regenerativkammern von
Glasöfen, welcher Stein eine im wesentlichen prismatische Gestalt aufweist, d a d u r c h   g e k e n n z e i c h n e t,
daß der Gitterstein (1) bereichsweise mit Zonen verminderter
Materialstärke ausgestattet ist, indem er an mindestens einer
seiner größeren Längsseitenflächen Vorsprünge (3, 4, 5, 6)
und/oder Vertiefungen (2, 2', 21, 22) aufweist.

2.      Gitterstein nach Anspruch 1, d a d u r c h   g e k e n n-
z e i c h n e t, daß der Stein (1) über seine gesamte Längserstreckung verlaufende, als Randstreifen (4, 5) ausgebildete
Vorsprünge, die mit den Grund- bzw. Deckflächen des Steines abschließen, und in seiner Längserstreckung einen durchgehenden
I-förmigen Querschnitt aufweist.

3.      Gitterstein nach Anspruch 1, d a d u r c h   g e k e n n-
z e i c h n e t, daß die Randstreifen (4, 5) über mindestens
einen quer zur größeren Längsseitenfläche verlaufenden Mittelsteg (3) verbunden sind, der mit den Randstreifen (4, 5) eben
abschließt.

4.      Gitterstein nach Anspruch 1, d a d u r c h   g e k e n n-
z e i c h n e t, daß in beiden größeren Längsseitenflächen des
Steines zentral angeordnete und allseitig umrandete Vertiefungen
(2) eingearbeitet sind.

5.      Gitterstein nach Anspruch 1, d a d u r c h   g e k e n n-
z e i c h n e t, daß der Stein (1) einen sich von seiner Grundfläche zu seiner Deckfläche erstreckenden, als Mittelrippe (6)
ausgebildeten Vorsprung aufweist, der vorzugsweise einen trapezförmigen Querschnitt besitzt.

6.      Gitterstein nach einem der Ansprüche 1 bis 5, d a-
d u r c h   g e k e n n z e i c h n e t, daß seine Grundfläche
zumindest abschnittweise eine Breite von mindestens 60 mm aufweist und daß seine minimale Wandstärke höchstens 50 mm beträgt.

0090455

Fig.1

Fig.2

Fig.3

0090455

Fig.4

Fig.5

**Fig.6**

**Fig.7**

**0090455**

Nummer der Anmeldung

Europäisches
Patentamt

**EUROPÄISCHER RECHERCHENBERICHT**

EP  83 20 0391

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-1 566 560   (GR-STEIN REFRACTORIES) <br> * Insgesamt * | 1,2 | F 28 D   17/02 <br> F 27 D    1/04 <br> F 27 D   17/00 <br> C 03 B    5/235 |
| | --- | | |
| X | US-A-4 108 733   (GERBER) <br> * Insgesamt * | 1 | |
| | --- | | |
| A | US-A-1 664 219   (LEE) <br> * Figur 4 * | 1,5 | |
| | --- | | |
| A | DE-A-2 500 432   (MARTIN & PAGENSTECHER) <br> * Insgesamt * | 1 | |
| | --- | | |
| A | GB-A-2 078 919   (VEITSCHER MAGNESITWERKE) <br> * Insgesamt * | 1 | RECHERCHIERTE SACHGEBIETE (Int. Cl. 3) |
| | --- | | |
| A | DE-C-1 242 811   (OWENS-ILLINOIS) <br> * Insgesamt * | 1 | F 28 D   17/00 <br> F 27 D   17/00 <br> F 27 D    1/00 <br> C 03 B    5/00 |
| | ----- | | |

Der vorliegende Recherchenbericht wurde für alle Patentansprüche erstellt.

| Recherchenort <br> DEN HAAG | Abschlußdatum der Recherche <br> 23-06-1983 | Prüfer <br> VAN DEN BOSSCHE W.L. |
|---|---|---|